Europäisches Patentamt

European Patent Office

Office européen des brevets

(11) Numéro de publication: **0 013 853**
**A1**

# (12) DEMANDE DE BREVET EUROPEEN

(21) Numéro de dépôt: **79401039.7**

(22) Date de dépôt: **19.12.79**

(51) Int. Cl.³: **G 06 F 3/04**

(30) Priorité: **29.12.78 FR 7836982**

(71) Demandeur: **COMPAGNIE INTERNATIONALE POUR L'INFORMATIQUE CII-HONEYWELL BULL (dite CII-HB), 94, avenue Gambetta, F-75020 Paris (FR)**

(43) Date de publication de la demande: **06.08.80 Bulletin 80/16**

(72) Inventeur: **Dusselier, Jean-Marie René, 21, avenue des Accacias, F-93420 Villepinte (FR)**

(84) Etats contractants désignés: **DE GB NL**

(74) Mandataire: **Lincot, Georges, 94, avenue Gambetta, F-75960 Paris Cedex 20 (FR)**

(54) Dispositif de transfert de données entre une unité centrale d'un calculateur numérique et une unité périphérique.

(57) L'invention concerne un dispositif de transfert de données entre une mémoire d'une unité périphérique et une mémoire d'une unité centrale d'un calculateur numérique. L'invention réside dans le fait que le dispositif de transfert de données 32 comprend principalement une mémoire 40 qui enregistre les informations d'un secteur et qui est adressée cycliquement par des circuits de comptage 41 de décodage, ledit compteur 41 étant commandé par des signaux provenant du circuit de commande 30 de l'unité périphérique.

L'invention est applicable aux calculateurs numériques

0013853

DISPOSITIF DE TRANSFERT DE DONNEES

La présente invention concerne les calculateurs numériques et, plus particulièrement un dispositif de transfert de données entre deux mémoires dont l'une est située dans une unité périphérique.

Un calculateur numérique comprend principalement une unité centrale connectée à des unités périphériques par l'intermédiaire d'interfaces. Ces unités périphériques sont constituées, par exemple, par des pupitres de commande, des imprimantes, des lecteurs de cartes perforées, des mémoires, etc... Ces mémoires, qui peuvent être des bandes magnétiques, des disques magnétiques, etc... permettent l'enregistrement d'informations ou de données diverses qui correspondent à des informations à traiter ou des informations de commande du traitement à effectuer, ces dernières étant plus connues sous le nom de programmes.

L'unité centrale comporte des mémoires dans lesquelles on vient enregistrer les informations provenant des mémoires des unités périphériques selon le traitement à effectuer et dans lesquelles on vient lire les résultats des calculs effectués par l'unité centrale. Il est donc indispensable d'effectuer des transferts de données entre l'unité centrale et les unités périphériques et ceci est également vrai entre les unités périphériques elles-mêmes. Ces transferts de données s'effectuent par l'intermédiaire des interfaces, ce qui les rend indisponibles pour d'autres tâches.

Le but de la présente invention est de réaliser un dispositif de transfert de données qui effectue des transferts de données vers ou en provenance des unités périphériques qui nécessite un minimum d'interventions de l'interface concernée.

L'objet de la présente invention est un dispositif de transfert de données entre une unité centrale d'un calculateur numérique et une unité périphérique, qui est connecté, d'une part, à une mémoire de l'unité centrale et d'autre part, à un circuit de commande de l'unité périphérique et qui est commandé par ledit circuit de commande qui reçoit les informations pour le transfert fournies par l'unité de commande de la pluralité d'unités périphériques dont ladite unité périphérique fait partie.

Le dispositif de transfert de données selon l'invention comprend principalement une mémoire d'enregistrement-lecture et des circuits d'adressage de ladite mémoire qui sont commandés par le circuit de commande de l'unité périphérique en fonction des informations reçues de l'unité de commande des unités périphériques, ladite mémoire étant connectée, d'une part, à la mémoire de l'unité centrale et, d'autre part, à la mémoire de l'unité périphérique, de manière à permettre le transfert des données dans le sens unité centrale vers l'unité périphérique et dans le sens inverse.

La présente invention sera mieux comprise à l'aide de la description suivante d'une forme de réalisation particulière donnée à titre d'exemple et représentée au dessin ci-annexé dans lequel :

La figure 1 est un schéma fonctionnel simplifié d'un calculateur et des ses unités périphériques,

La figure 2 est un schéma fonctionnel montrant la disposition du dispositif de transfert de données selon la présente invention, et

La figure 3 est un schéma fonctionnel du dispositif de transfert de données selon la présente invention.

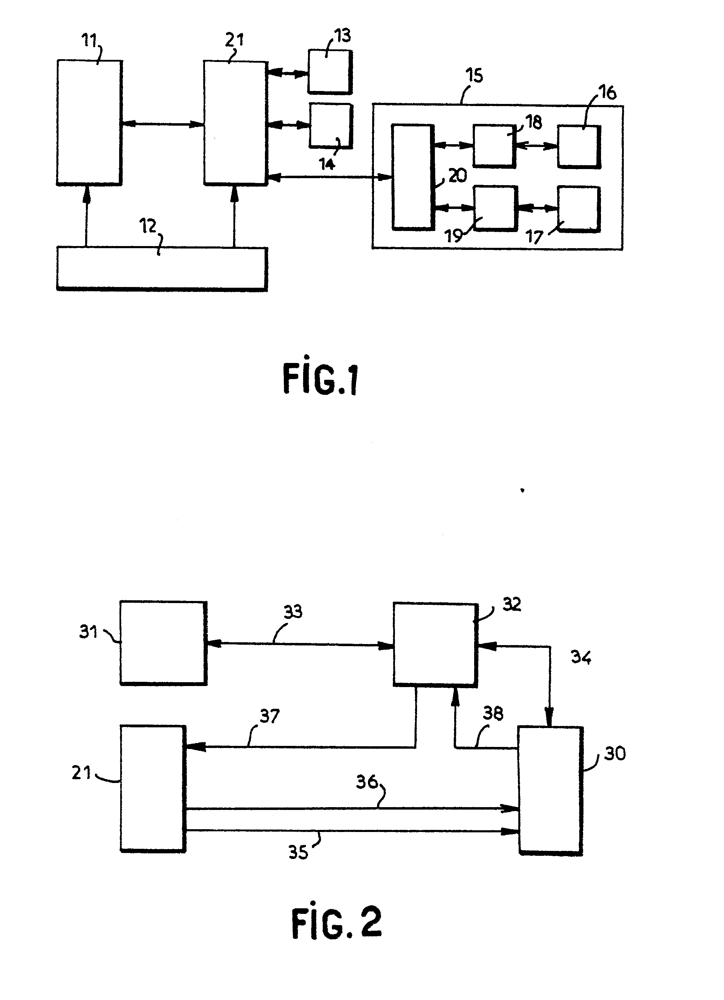

Sur la figure 1, un calculateur numérique comprend une unité centrale 11, qui est connectée, d'une part, à une unité de commande 12 et, d'autre part, à des unités périphériques 13, 14 et 15 par l'intermédiaire d'une interface 21. L'unité périphérique 15 est, par exemple, une unité mémoire à disques comportant deux disques magnétiques flexibles 16 et 17. Cette unité 15 comporte également deux circuits d'attaque 18 et 19 qui commandent l'enregistrement et la lecture dans les disques flexibles 16 et 17 respectivement et qui sont commandés par un circuit adaptateur 20.

Le circuit adaptateur 20, qui est représenté plus en détail sur la figure 2, comprend un circuit de commande 30 dont les sorties sont connectées aux entrées des circuits d'attaque 18 et 19 et dont les entrées sont connectées aux sorties de l'interface 21. Le circuit de commande 30 et l'interface 21 peuvent être constitués par des circuits intégrés disponibles dans le commerce et sont prévus pour effectuer, entre autres fonctions, le transfert des informations contenues dans les disques 16 et 17 vers une autre mémoire 31 qui peut être celle de l'unité centrale 11 ainsi que le transfert en sens inverse. Ces transferts sont en général effectués sous la commande directe de l'interface 21 qui doit en conséquence intervenir continuellement même si certaines opérations sont effectuées directement par le circuit de commande 30.

Selon la présente invention, le transfert de données bidirectionnel entre les mémoires à disques 16 et 17 et la mémoire 31 est effectuée par l'intermédiaire d'un dispositif 32. Ce dispositif 32 est connecté respectivement à la mémoire 31 et au circuit de commande 30 par des liaisons bidirectionnelles 33 et 34. Il existe de nombreux conducteurs de liaison entre l'interface 21 et le circuit de commande 30, mais pour mettre en oeuvre l'invention, il suffit d'un groupe de conducteurs 35 pour la transmission vers le circuit 30 des informations nécessaires au transfert de données et du conducteur 36 qui transmet le signal de fin de transfert. Le dispositif 32 est connecté à l'interface 21 par un conducteur 37 qui transmet un signal d'état EV à l'interface 21 et au circuit de commande 30 par des conducteurs 38 qui lui transmettent certains signaux d'information.

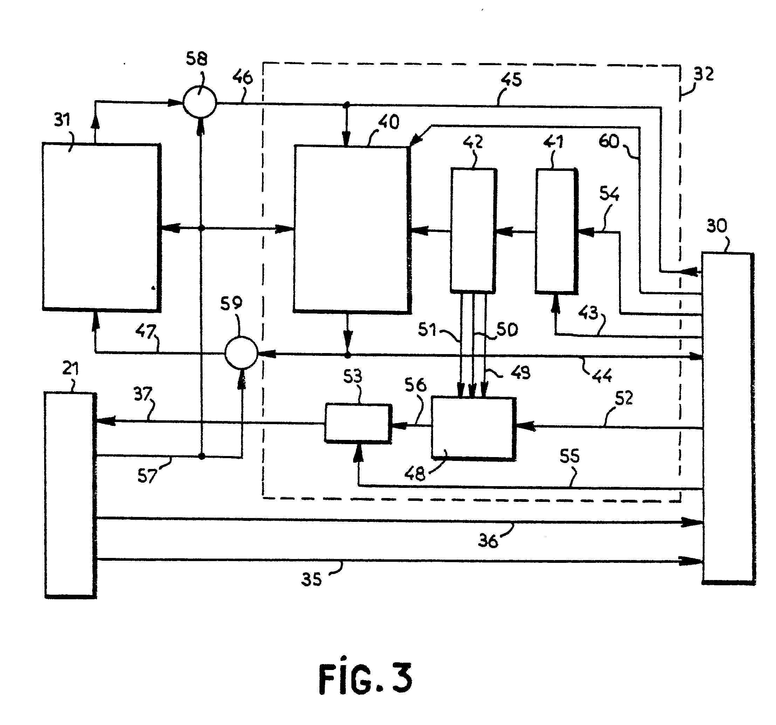

Le dispositif de transfert de données 32 comprend (fig. 3) une mémoire 40, un circuit d'adressage de la mémoire 40 consitué d'un premier compteur 41 et d'un circuit de décodage 42, d'un circuit logique 48 et d'un deuxième compteur 53. La capacité de la mémoire 40 est prévue pour permettre l'enregistrement des informations que peut contenir un secteur au moins, par exemple cinq cent douze octets. Les octets à enregistrer proviennent soit de la mémoire 39 de l'unité centrale par l'intermédiaire d'un bus 46, soit de la mémoire de l'unité périphérique par l'intermédiaire du circuit de commande 30 et d'un bus 45. Les octets qui ont été enregistrés dans la mémoire 40 sont transférés soit dans la mémoire 31 par l'intermédiaire d'un bus 47, soit dans la mémoire de l'unité périphérique par l'intermédiaire d'un bus 44 et de l'unité de commande 30.

Le compteur 41 est connecté au circuit de commande 30 par un premier conducteur 43 qui transmet un signal de positionnement au début d'un transfert et par un deuxième conducteur 54 qui transmet un signal d'avance du compteur chaque fois qu'un octet est enregistré dans la mémoire de l'unité périphérique.

Le circuit logique 48 est connecté au circuit de décodage 42 par trois conducteurs 49, 50 et 51 qui transmettent les signaux correspondant respectivement aux positions 128, 256 et 512 du compteur 41. Le circuit logique 48 est également connecté au circuit de commande 30 par les conducteurs 52 qui indiquent la longueur des secteurs à lire ou à enregistrer sur la piste concernée, c'est-à-dire s'il s'agit de secteurs à 128 octets, ou à 256 octets ou encore à 512 octets. Il fournit à sa sortie sur le conducteur 56 un signal indiquant que tous les octets d'un secteur ont été transférés et ceci quelle que soit la longueur du secteur.

Le conducteur 56 connecte le circuit logique 48 au compteur 53 qui est en fait un compteur-décompteur dont la position de départ est "forcée" par les signaux transmis sur les conducteurs 55. Ces signaux indiquent le nombre de secteurs successifs à enregistrer ou à lire sur la piste concernée. Il en résulte donc qu'au fur et à mesure des signaux apparaissant sur le conducteur 56, le compteur-décompteur 53 revient vers la position zéro à laquelle il fournit un signal de fin de tranfert à l'unité de commande 21.

Le circuit de commande 30 est également connecté à la mémoire 40 par un conducteur 60 qui transmet un signal indiquant le sens du transfert de données ou plus précisément le type d'opération, enregistrement ou lecture, à effectuer dans ladite mémoire.

Comme on l'a décrit précédemment en relation avec la figure 2, l'unité de commande 21 est, pour les besoins du transfert de données, connectée au circuit de commande 30 par un conducteur 36 qui transmet un signal de début de transfert et par des conducteurs 35 qui transmettent les informations nécessaires au transfert, à savoir, dans le cas d'un disque, la face concernée du disque, la piste concernée, le numéro du premier secteur à transférer, la longueur du secteur, le sens du transfert et le nombre de secteurs. Ces informations sont enregistrées dans des registres (non représentés) du circuit de commande 30.

Le transfert de données peut s'effectuer soit secteur par secteur, c'est-à-dire avec intervention de l'unité de commande 21 après chaque transfert des octets d'un secteur, soit plusieurs secteurs sans intervention de l'unité de commande 21. Mais ces deux modes ne changent pas le dispositif de transfert car cela correspond à un positionnement initial différent du compteur-décompteur 53.

Dans le dispositif de transfert 32, l'adressage de la mémoire 40 pour le transfert vers ou en provenance de la mémoire à disque s'effectue par l'intermédiaire des circuits 41 et 42 prévus à cet effet. Pour le transfert vers ou en provenance de la mémoire 31, l'adressage de la mémoire 40 ainsi que les commandes de transfert sont effectués par l'unité de commande 21 et ceci a été représenté très schématiquement par les conducteurs 57 qui connectent l'unité de commande 21 aux mémoires 31 et 40 et aux circuits de porte 58 et 59 disposés respectivement sur les bus 46 et 47.

Le fonctionnement de l'ensemble des circuits de la figure 3 est alors le suivant en ce qui concerne le transfert des données entre la mémoire 40 et la mémoire à disque de l'unité périphérique.

Au départ, l'unité de commande 21 fournit au circuit de commande 30 sur les conducteurs 35 les informations nécessaires au transfert, à savoir les codes définissant la piste, la face du disque, le premier secteur, la longueur du secteur, le nombre de secteurs à transférer et le sens du transfert. Il fournit également le signal de début de transfert sur le conducteur 36.

Le circuit 30 fournit alors un signal de positionnement du compteur 41, position dont le décodage par le circuit 42 permet l'adressage de la mémoire 40 à l'emplacement du premier octet à lire ou à enregistrer dans ladite mémoire. Le circuit 30 fournit également sur le conducteur 60 le signal indiquant le sens du transfert, c'est-à-dire le type d'opération à effectuer dans la mémoire 40, lecture ou enregistrement. Le positionnement du compteur-décompteur 53 est obtenu au début du transfert par les signaux transmis sur les conducteurs 55.

Quelle que soit l'opération envisagée dans la mémoire 40, le fonctionnement des circuits annexes est le même. Lorsque le premier octet a été transféré, le circuit 30 fournit sur le conducteur 54 un signal d'avance du compteur 41, ce qui permet la sélection de l'emplacement du deuxième octet à transférer. Un tranfert s'effectue donc au rythme des signaux fournis par le circuit 30 après chaque transfert d'octet.

Lorsque le compteur 41 arrive à la position 128, le circuit de décodage 42 fournit un signal sur le conducteur 49 qui est utilisé dans le circuit logique 48, en combinaison avec l'information de longueur de secteur (conducteurs 52), pour élaborer ou non un signal de sortie sur le conducteur 56. Ainsi, si la longueur du secteur est de 128 octets, le compteur-décompteur 53 modifie sa positon d'une unité. Dans le cas du transfert d'un seul secteur, le compteur-décompteur 53, qui avait été mis à la position 1 au début du transfert (conducteurs 55), revient à la position zéro et fournit donc sur le conducteur 37 un signal de fin de transfert EV à l'unité de commande 20; en réponse, l'unité 20 envoie un signal de fin de transfert sur le conducteur 36 de manière à arrêter les opérations de transfert du circuit 30.

Dans le cas des secteurs à 256 et 512 octets, ce sont les conducteurs 50 et 51 qui fournissent respectivement un signal qui est utilisé pour commander le compteur-décompteur 53.

Selon l'organisation de la mémoire 40, et son mode de fonctionnement, le signal sur le conducteur de sortie 56 du circuit logique 48 peut être utilisé pour remettre le compteur 41 à une position initiale, de manière à sélectionner l'emplacement du premier octet du secteur suivant s'il est prévu de transférer lusieurs secteurs sans faire intervenir l'unité de commande 21. Cet emplacement peut être le même que pour le premier secteur si la mémoire 40 a été lue ou enregistrée par l'unité de commande 21 (conducteur 57) pendant le transfert du premier secteur. Il peut aussi être différent et, dans ce cas, le compteur 41 doit être positionné en conséquence; ceci peut être réalisé de différentes manières selon l'organisation interne de la mémoire 40. Par exemple, on peut prévoir que le signal sur le conducteur 56 remette le compteur 41 à la position initiale et qu'il soit utilisé pour modifier l'adressage de la mémoire de manière à sélectionner un autre bloc de 128, 256 ou 512 emplacements d'octets, emplacements dudit bloc qui seraient alors sélectionnés par les circuits 41 et 42.

L'invention qui vient d'être décrite en relation avec un exemple particulier de réalisation n'est pas limitée à cet exemple et peut être mise en oeuvre par différents transferts de données, c'est-à-dire non pas uniquement entre la mémoire de l'unité centrale et une mémoire à disque, mais aussi entre les mémoires de deux unités périphériques quelconque.

- 1 -

REVENDICATIONS

1. Disposition de transfert de données entre une unité centrale d'un calculateur numérique et une unité périphérique, caractérisé en ce qu'il est connecté, d'une part, à une mémoire de l'unité centrale ou d'une autre unité périphérique, et d'autre part, à une mémoire de l'unité périphérique par l'intermédiaire d'un circuit de commande dudit périphérique, et en ce qu'il est commandé par ledit circuit de commande de ladite unité périphérique.

2. Dispositif de transfert de données selon la revendication 1, caractérisé en ce que ledit dispositif comprend une mémoire qui fonctionne à l'enregistrement et à la lecture et qui est connectée d'une part, à la mémoire de l'unité centrale ou de l'autre unité périphérique et, d'autre part, à la mémoire de l'unité périphérique, des circuits d'adressage de ladite mémoire dudit dispositif qui sont commandés par des signaux fournis par le circuit de commande de l'unité périphérique et un circuit logique qui fournit un signal de fin de transfert de données à l'unité de commande des unités périphériques.

3. Dispositif de transfert de données selon la revendication 2, caractérisé en ce que le circuit logique est connecté d'une part à l'unité de commande de mémoire à recevoir l'information du nombre d'octets à transférer, et, d'autre part, aux circuits d'adressage, et en ce qu'il élabore un signal indiquant la fin d'un transfert.

0013853

FİG.1

FİG.2

FIG.3

Office européer
des brevets

**RAPPORT DE RECHERCHE EUROPEENNE**

0013853
Numéro de la demande

EP 79 40 1039

| Catégorie | Citation du document avec indication, en cas de besoin, des parties pertinentes | Revendication concernée |
|---|---|---|
| X | <u>US - A - 4 040 026</u> (GERNELLE)<br>* Colonne 1, lignes 9-12, 50-65; colonne 2, lignes 8-13, 22-36, 66-68; colonne 3, lignes 1-12, 47-68; colonne 4, lignes 5-61; colonne 5, lignes 26-58; colonne 6, lignes 46-50, 66-68; colonne 7, lignes 1-12, 21-26; figures 1,2 * | 1-3 |
| | <u>FR - A - 2 267 587</u> (DATAPLEX)<br>* Page 1, lignes 1-3, 33-39; page 3, lignes 39-45; page 4, lignes 1-8; figure 1 * | 1,2 |

**DOCUMENTS CONSIDERES COMME PERTINENTS**

**CLASSEMENT DE LA DEMANDE (Int. Cl. ³)**

G 06 F 3/04

**DOMAINES TECHNIQUES RECHERCHES (Int. Cl. ³)**

G 06 F 3/04

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 01-04-1980 | DHEERE |

OEB Form 1503.1  06.78